# EUROPÄISCHE PATENTANMELDUNG

(11) **EP 1 213 052 A1**
(43) Veröffentlichungstag der Anmeldung: **12.06.2002**
(21) Anmeldenummer: 00127023.0
(22) Anmeldetag: 09.12.2000
(51) Int. Cl.: B01J 8/02, B01J 8/04, B01J 19/08, C01C 3/02, C01B 3/32

(54) **Elektrisch beheizter Festbettreaktor und seine Verwendung**

(71) Anmelder: Degussa AG, 40474 Düsseldorf (DE)
(72) Erfinder: Schütte, Rüdiger, Dr., 63755 Alzenau (DE); Balduf, Thorsten, Dr., 45772 Marl (DE); Machnik, Reinhardt, 63517 Rodenbach (DE); Wieland, Stefan, Dr., 63069 Offenbach (DE)

(57) **Zusammenfassung**

Elektrisch beheizbare Festbettreaktoren zur Durchführung von Reaktionen sind bekannt, sie weisen aber einen schlechten Wirkungsgrad auf und lassen sich kaum bei hohen Temperaturen verwenden. Der erfindungsgemäße Reaktor überwindet diese Probleme. Er umfasst ein Reaktorgehäuse und mindestens ein Elektrodenpaar (5,7) mit einem dazwischen angeordneten fluiddurchströmbaren Festbett aus elektrisch leitfähigem Material; die Elektroden (5,7) sind plattenförmig oder rohrförmig ausgebildet und stehen parallel zueinander oder sind konzentrisch ineinander angeordnet. Ein bevorzugter Reaktor mit zwei rohrförmigen Elektroden weist eine innere zylinderförmige und eine zwischen den Elektroden liegende hohlzylinderförmige Kammer (11) auf.

Der Reaktor eignet sich zur Durchführung von Gasreaktionen, wie der Herstellung von Blausäure und dem BMA-Verfahren.

## Beschreibung

Die Erfindung richtet sich auf einen elektrisch beheizten Festbettreaktor, der in einem Reaktorgehäuse mindestens ein Elektrodenpaar enthält und zwischen den Elektroden ein fluidpermeables Festbett aus einem teilchenförmigen Material mit geeigneter elektrischer Leitfähigkeit angeordnet ist. Die Erfindung richtet sich ferner auf die Verwendung des Reaktors zur Durchführung chemischer Reaktionen, wobei ein fluides Medium durch das elektrisch beheizte Festbett geleitet wird.

Zur Durchführung chemischer Reaktionen, insbesondere endothermer Reaktionen und Reaktionen, welche eine hohe Aktivierungsenergie erfordern, kann die erforderliche Energie in einem elektrisch beheizten Festbettreaktor zur Verfügung gestellt werden. Demgemäß sind unterschiedliche Ausgestaltungen elektrisch beheizter Reaktoren bekannt.

Die WO 95/21126 lehrt beispielsweise ein Verfahren zur Herstellung von Cyanwasserstoff, wobei ein Gemisch aus Ammoniak und einem Kohlenwasserstoffgas, wie Methan, durch ein mit einem Katalysator gefülltes Reaktionsrohr geleitet wird und die erforderliche Energie durch eine induktive Beheizung des Katalysators bereitgestellt wird. Vorrichtungen zur induktiven Beheizung eines Reaktors erfordern einen hohen technischen Aufwand, der nur in seltenen Fällen wirtschaftlich tragbar ist.

Gleichfalls auf ein Verfahren zur Herstellung von Cyanwasserstoff unter Einsatz eines elektrisch beheizten Reaktors gerichtet ist die WO 96/15983. Der Reaktor umfaßt eine Ofenkammer, in welcher elektrisch beheizte Reaktionsrohre angeordnet sind. Die Reaktionsrohre bestehen aus einem entsprechend leitfähigen Material oder enthalten ein solches, und der Strom fließt durch die Seitenwand des Reaktionsrohres oder wird hierin induziert. Die Reaktionsrohre werden von dem umzusetzenden Gasgemisch durchströmt. Die erforderliche thermische Energie wird ausschließlich durch die Beheizung der Reaktionsrohre, in welchen kein Festbett angeordnet ist, übertragen.

Ein elektrisch beheizter Festbettreaktor, der sich für die Durchführung heterogen katalysierter Reaktionen eignet und einen verbesserten Wirkungsgrad aufweist als die zuvor gewürdigten Reaktoren, ist aus der WO 98/48925 bekannt: Der Reaktor enthält im Inneren der Heizung einen Katalysator, der durch die elektrische Heizung mit einer offenen Porösität direkt beheizt wird. Gemäß einer Ausführungsform befindet sich der Katalysator lose innerhalb einer behälterförmigen, insbesondere rohrförmigen aus Halbleitermaterial bestehenden elektrischen Heizung. Die Stromzuführung erfolgt über die beiden Enden der rohrförmigen Heizung. Bei dem in der rohrförmigen Heizung angeordneten Katalysator kann es sich um ein teilchenförmiges Halbleitermaterial handeln, in welchem aufgrund seines elektrischen Widerstandes zugeführte elektrische Energie mit hohem Wirkungsgrad in Wärmeenergie überführt wird. Nachteilig an einem derartigen Reaktor ist der durch die Herstellung beschränkte Bereich der Einsatztemperatur (< 1000 °C) und die Beschränkung auf den Einsatz im kleintechnischen Maßstab.

Eine weitere Ausgestaltung eines elektrisch beheizten Reaktors, bei welchem ein in einem Behälter befindliches Festbett aus teilchenförmigem Material mit entsprechender elektrischer Leitfähigkeit elektrisch aufgeheizt wird, lehrt die EP-A 0 104 749: Der Reaktor enthält in einem Gehäuse mindestens drei nichtleitende, mit einem Festbett gefüllte Reaktionsrohre und in jedem Reaktionsrohr mindestens ein Elektrodenpaar, wovon je eine Elektrode mit einem Pol eines Dreiphasenstroms verbunden ist. Gemäß üblicher Ausbildung befinden sich die Elektroden eines jeden Elektrodenpaares an den beiden Enden des rohrförmigen Reaktors, so dass in Abhängigkeit von der Höhe des Reaktors gegebenenfalls sehr hohe Spannungen erforderlich sind, um einen für die Aufheizung erforderlichen Strom durch die Schüttung fließen zu lassen. Gemäß einer weiteren Ausführungsform (Figur 7) befindet sich in jedem der drei rohrförmigen Reaktoren eine stabförmige Elektrode. Die Wände der drei rohrförmigen Reaktoren sind miteinander elektrisch verbunden und wirken als Gegenelektrode. Das durch Widerstandsheizung aufzuheizende teilchenförmige Material befindet sich zwischen den Elektroden. Die drei Reaktoren sind von einem thermischen und elektrischen Widerstandsmaterial umgeben. Nachteilig an diesem elektrisch beheizbaren Reaktor ist der durch die mindestens drei rohrförmigen Reaktoren bedingte technische Aufwand und die daraus resultierende Ungleichverteilung des Fluidstromes.

Die für chemische Umsetzungen erforderliche thermische Energie lässt sich gemäß JP-A 4-132662 auch durch den Einsatz eines elektrisch leitfähigen keramischen Sinterkörpers mit durchgehenden Kanälen, die ihrerseits mit einem Katalysator beschichtet sein können, bewirken. Der Sinterkörper befindet sich zwischen zwei Elektroden, welche mit einer Spannungsquelle verbunden sind. Nachteilig an diesem elektrisch beheizbaren Festbettreaktor mit einem porösen Sinterkörper ist der technische Aufwand, welcher zur Herstellung des porösen und/oder durchgehende Kanäle aufweisenden Sinterkörpers verbunden ist. Zudem kann es in den Poren zu Verstopfungen kommen, so dass es zu einer Reduzierung der katalytischen Wirksamkeit kommt. Außerdem können durch Thermospannungen Risse in den Sinterkörpern entstehen, die zu einer Unterbrechung der Kontakte und dadurch zu inhomogenen Temperaturfeldern führen.

Alle bisher bekannten Systeme haben einen schlechten Wirkungsgrad und/oder erreichen nur begrenzte Temperaturen.

Aufgabe der vorliegenden Erfindung ist die Bereitstellung eines weiteren elektrisch beheizbaren Festbettreaktors, der sich zum Aufheizen eines fluiden Mediums und Durchführung von Reaktionen in solchen fluiden Medien eignet. Der erfindungsgemäße Festbettreaktor sollte darüber hinaus die Nachteile, welche der eine oder andere vorbekannte Reaktor aufweist, nicht mehr oder zumindest in geringerem Umfang zeigen. Gemäß einer weiteren Aufgabe der Erfindung sollte der Reaktor durch einen möglichst einfachen technischen Aufbau gekennzeichnet sein und einen hohen Wirkungsgrad aufweisen.

Gefunden wurde ein elektrisch beheizter Festbettreaktor, umfassend ein Reaktorgehäuse, mindestens ein darin angeordnetes Elektrodenpaar, ein zwischen den beiden Elektroden eines jeden Elektrodenpaares angeordnetes fluiddurchströmbares Festbett aus einem teilchenförmigen elektrisch leitfähigen Material, je eine Vorrichtung zum Zuführen eines Fluids in und Abführen desselben aus jedem Festbett und Kontaktierelemente von den Elektroden jeden Elektrodenpaares zu einer Spannungsquelle, der dadurch gekennzeichnet ist, dass (i) die beiden Elektroden eines Elektrodenpaares plattenförmig ausgebildet und parallel zueinander und gegenüberliegend angeordnet sind und mit dem dazwischen befindlichen Festbett eine elektrisch beheizbare Reaktorkammer bilden oder dass (ii) die beiden Elektroden eines Elektrodenpaares rohrförmig ausgebildet sind, die einen unterschiedlichen Durchmesser aufweisende rohrförmigen Elektroden eines Elektrodenpaares konzentrisch ineinander stehen und mit dem zwischen den Elektroden befindlichem Festbett eine hohlzylinderförmige elektrisch beheizbare Reaktorkammer bilden, und dass in einem Reaktor gemäß (i) oder (ii) mit mehr als einem Elektrodenpaar und damit mehr als einer Reaktorkammer zwei Kammern eine als gemeinsame Elektrode ausgebildete Zwischenwand aufweisen.

Ein wesentliches Kennzeichen des erfindungsgemäßem Reaktors richtet sich auf die Ausgestaltung des in einem Reaktorgehäuse enthaltenen mindestens einen Elektrodenpaares. Hierbei handelt es sich entweder um zwei parallel zueinander und gegenüber angeordnete ebene Platten aus einem elektrisch leitfähigen Material oder gemäß einer bevorzugten Ausführungsform um zwei rohrförmige Elektroden mit unterschiedlichem Durchmesser, welche konzentrisch ineinander stehen.

Zwischen den beiden Elektroden eines Elektrodenpaares befindet sich das Festbett aus einem teilchenförmigen Material, das aufgrund seiner Leitfähigkeit einer Widerstandsheizung zugänglich ist. Die Positionierung der beiden Elektroden eines Elektodenpaares innerhalb eines Reaktorgehäuses ist derart, dass ein fluides Medium, also ein gasförmiges oder flüssiges Medium, durch das Festbett strömen und sich hierbei aufheizen kann. Das zwischen den Elektroden befindliche Festbett kann hierbei entweder nur dem Aufheizen des fluiden Mediums dienen oder gleichzeitig eine Reaktion von Bestandteilen des Mediums bewirken. Sofern innerhalb dieses Festbettes eine Reaktion durchgeführt werden soll, kann das teilchenförmige Material katalytisch wirksame Bestandteile enthalten.

Gemäß einer bevorzugten Ausführungsform enthält der Reaktor außer der Kammer, welche das elektrisch beheizbare Festbett enthält, auf der Gegenseite einer der Elektroden eine Kammer oder auf der Gegenseite beider Elektroden je eine Kammer, welche der Fluidverteilung oder Sammlung dient. Diese Kammer(n) kann(können) selbst mit einem Festbett gefüllt sein, das entweder der Vorerhitzung des Fluids oder einer heterogen katalysierten Umsetzung von Bestandteilen des Fluids dienen.

Ein bevorzugter Festbettreaktor ist dadurch gekennzeichnet, dass er ein Elektrodenpaar mit rohrförmigen Elektroden aufweist, das Reaktorgehäuse einen Boden, eine Decke und eine Gehäusewand umfasst, wobei die eine Elektrode jeden Elektrodenpaares über den Boden und die andere Elektrode über die Decke als Kontaktierelement mit je einem Pol einer Spannungsquelle verbunden ist, in jeder rohrförmigen Wand der Reaktorkammer mindestens eine Öffnung zum Zuführen oder Abführen eines Fluids aufweist, zwischen der Gehäusewand und der außenliegenden Elektrode eine mit einem Stutzen zum Zu- oder Abführen eines Fluids versehene
hohlzylinderförmige Kammer ausgebildet ist und die von der innenliegenden Elektrode umschlossene zylinderförmige Kammer einen Stutzen zum Zu- oder Abführen eines Fluids aufweist.

Das elektrisch beheizbare Festbett enthält eine Schüttung aus elektrisch leitfähigen Formkörpern, wie Kugeln, Granulaten, Tabletten oder Satteln. Die Formkörper enthalten mindestens einen leitfähigen Anteil. Durch eine Kombination eines leitfähigen Anteils mit einem oder mehreren nicht leitenden Anteilen, wobei sowohl die leitfähige als auch die nichtleitenden Komponenten bei Bedarf eine katalytische Wirkung aufweisen können, lässt sich der gewünschte Widerstandswert der Formkörper einstellen. Je nach dem spezifischen Widerstand der Formkörper und der an die Elektroden gelegten Spannung lassen sich die für die gewünschte Reaktion erforderliche Temperatur einstellen. Je nach dem Größenverhältnis des Reaktors und dem gewünschten Widerstand der Schüttung können die zumindest teilweise leitfähigen Partikel massiv oder selbst porös aufgebaut sein. Zur Bereitstellung derartiger Partikel kommen alle bekannten Formgebungsverfahren, wie zum Beispiel Extrusion und Granulation, in Frage.

Als leitfähige Materialien für die Schüttung kommen Metalle, Kohlenstoff in all seinen Formen, wie Graphit, Ruß, Kohle und Aktivkohle, oder leitfähige keramische Stoffe, wie Karbide und Nitride, beispielsweise SiC, SiSiC und TiN, in Betracht. Der spezifische Widerstand der Partikel für das Festbett lässt sich in einfacher Weise durch Abmischen eines leitenden mit einem nichtleitenden oder halbleitenden Materials, wie Abmischen von Graphit mit SiO₂ und/oder Al₂O₃ oder von Graphit mit SiC, erhalten. Das leitfähige Material muss hierbei in einer Menge oberhalb der Perkulationsgrenze anwesend sein.

Die Art und Weise, wie ein zu erhitzendes und gegebenenfalls gleichzeitig umzusetzendes Medium durch das zwischen dem mindestens einen Elektrodenpaar befindliche Festbett geleitet wird, kann sehr unterschiedlich sein. Beispielsweise kann das Fluid an einer Seite des Festbettes zu- und an der gegenüberliegenden Seite abgeführt werden. Gemäß einer weiteren Ausführungsform wird das zu erhitzende und umzusetzende fluide Medium mäanderförmig durch den Reaktor geführt, wobei das Fluid durch eine oder vorzugsweise mehrere Öffnungen im unteren oder oberen Teil der einen Elektrode zugeführt und durch entsprechende Öffnungen der Gegenelektrode abgeführt wird.

Gemäß einer weiteren Alternative können die ein Elektrodenpaar bildenden Elektroden selbst für das Fluid permeabel sein, beispielsweise durch durchgehende Poren oder über die Fläche im wesentlichen gleichförmig verteilte Bohrungen. Die letztgenannte Ausführungsform wird dann in Betracht gezogen, wenn bereits nach einer kurzen Passage des Fluids durch das Festbett - üblicherweise handelt es sich hierbei um eine Strömung senkrecht zu den beiden Elektroden - die für eine Umsetzung erforderliche Temperatur erreicht wird.

Durch eine mäanderförmige Führung des fluiden Mediums durch einen erfindungsgemäßen Reaktor, welcher zu beiden Seiten des Elektrodenpaares eine weitere Kammer enthält, werden ein interner Wärmeaustausch bewirkt und damit eine höhere Energieeffizienz erzielt und der Aufwand für die Bereitstellung externer Wärmeaustauscher vermieden oder zumindest vermindert. Insbesondere wenn die Reaktionsprodukte nach Durchlaufen der Reaktionszone schnellstmöglich gequencht werden müssen, ist dies von entscheidender Bedeutung.

Figur 1 zeigt einen Längsschnitt durch einen erfindungsgemäßen elektrisch beheizbaren Festbettreaktor mit einer rohrförmigen Innen- und rohrförmigen Außenelektrode.

Figur 1A zeigt einen Schnitt durch die Ebene A-A der Figur 1, also die Ebene der inneren Elektrode mit Durchlassöffnungen für das Fluid in eine innere Kammer.

Figur 1B zeigt den Ausschnitt X der Figur 1 und betrifft die Kontaktierung der Elektrode mit dem bodenseitigen als Stromzuführung ausgebildeten Kammerverschluss.

Figur 2 zeigt einen Längsschnitt durch eine alternative Ausführungsform des Reaktors; Fluidzuführung und -abführung erfolgt durch Öffnungen in den Elektroden.

Figur 3 zeigt ein Schema eines Reaktors mit einem ersten Festbett in der inneren Kammer und einem elektrisch beheizbaren zweiten Festbett zwischen den Elektroden und eine Ausführungsform (Pfeile) für die Passage des Fluids durch den Reaktor.

Figur 4A, 4B und 4C zeigen jeweils eine Ausführungsform der Passage eines Fluids durch den Reaktor. Das Reaktorgehäuse ist nicht abgebildet.

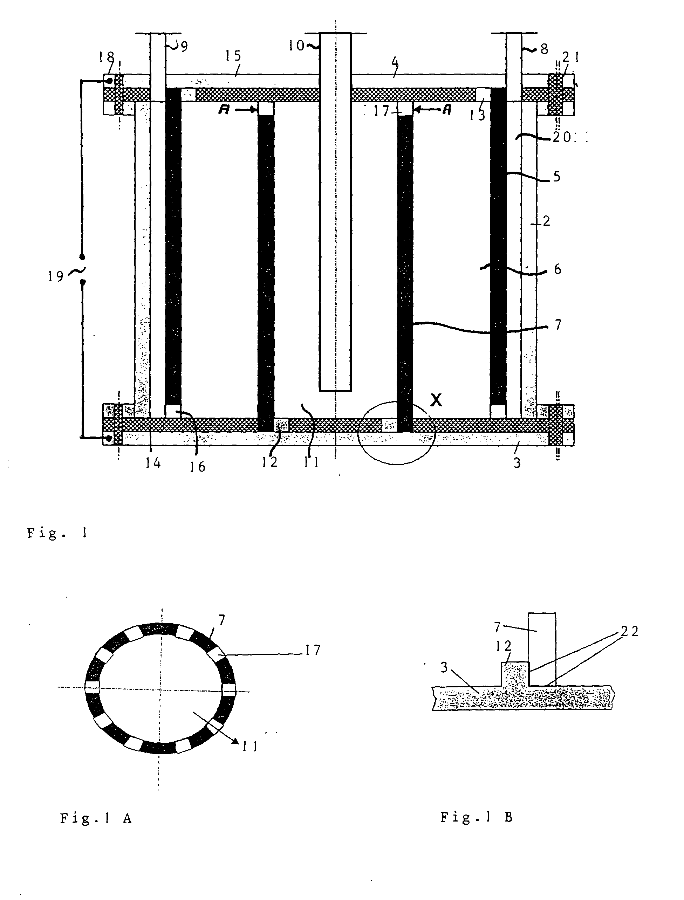

Figur 1 zeigt einen Schnitt durch eine bevorzugte Ausführungsform des elektrisch beheizbaren Reaktors 1. Der Reaktor 1 umfasst ein Reaktorgehäuse, eine rohrförmige innere Elektrode 5 und eine rohrförmige äußere Elektrode 7. Das Reaktorgehäuse umfasst einen rohrförmigen Reaktormantel 2, einen Reaktorboden 3 und eine Reaktordecke 4.

Die innere Elektrode ist zur Erhöhung der Kontaktfläche und zur Zentrierung mittels eines Absatzes (Kontaktierelement) 12 mit dem Reaktorboden 3 und die äußere Elektrode mittels eines Absatzes (Kontaktierelement) 13 mit der Reaktordecke 4 kontaktiert. Reaktorboden 3 und -decke 4 sind aus einem elektrisch gut leitenden Material gefertigt und über einen deckenseitigen und bodenseitigen Stromanschluss 18 mit einer Spannungsquelle 19 verbunden. Eine boden- und deckenseitige Isolierung 14 und 15, welche beispielsweise als Flanschdichtungen ausgebildet sein können, dienen der Wärme und Stromisolierung.

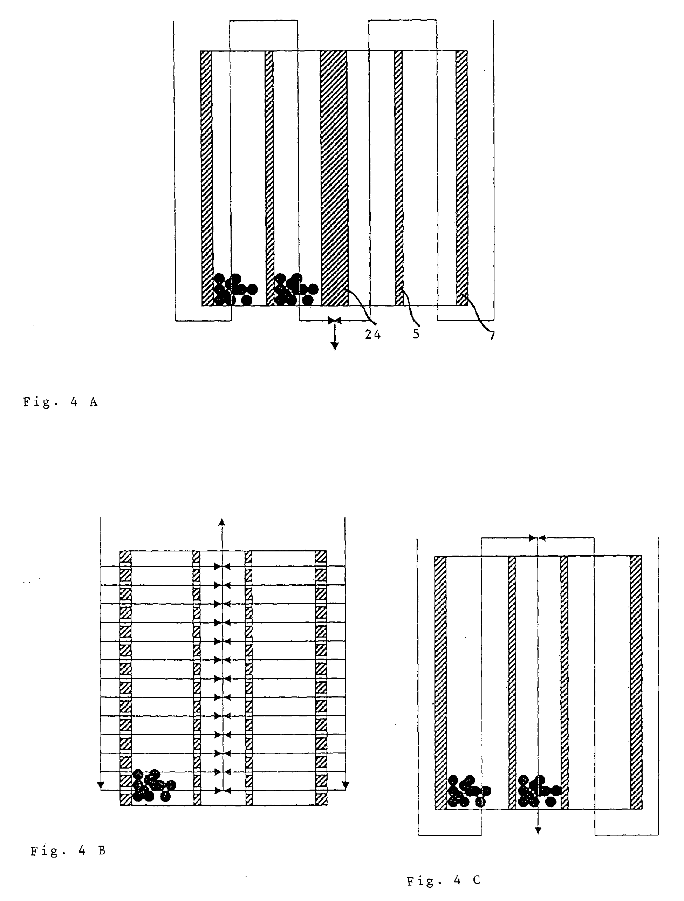

Zwischen den beiden Elektroden befindet sich eine hohlzylinderförmige Kammer 6, in welcher das für die elektrische Beheizung benötigte elektrisch leitfähige teilchenförmige Material als fluidpermeables Festbett angeordnet ist. Das Festbett selbst ist in Figur 1 nicht dargestellt, wohl aber in den Figuren 3 und 4 in schematischer Form. Die innere Elektrode umschließt eine innere Kammer 11, welche leer sein kann, oder einen Feststoff aus einem teilchenförmigen Material, etwa einen Feststoffkatalysator enthält. Die zwischen der äußeren Elektrode 7 und dem Reaktormantel 2 gebildete äußere Kammer 20 dient als Fluidsammel- oder -verteilerkammer und kann wie die innere Kammer leer sein oder einen Feststoff enthalten. Die innere Kammer 11 und die äußere Kammer 20 sind jeweils mit mindestens einer Vorrichtung 10 bzw. 8 und 9 zum Zu- oder Abführen eines Fluids ausgestattet. Diese Vorrichtungen sind im allgemeinen als Rohr oder Rohrstutzen ausgebildet.

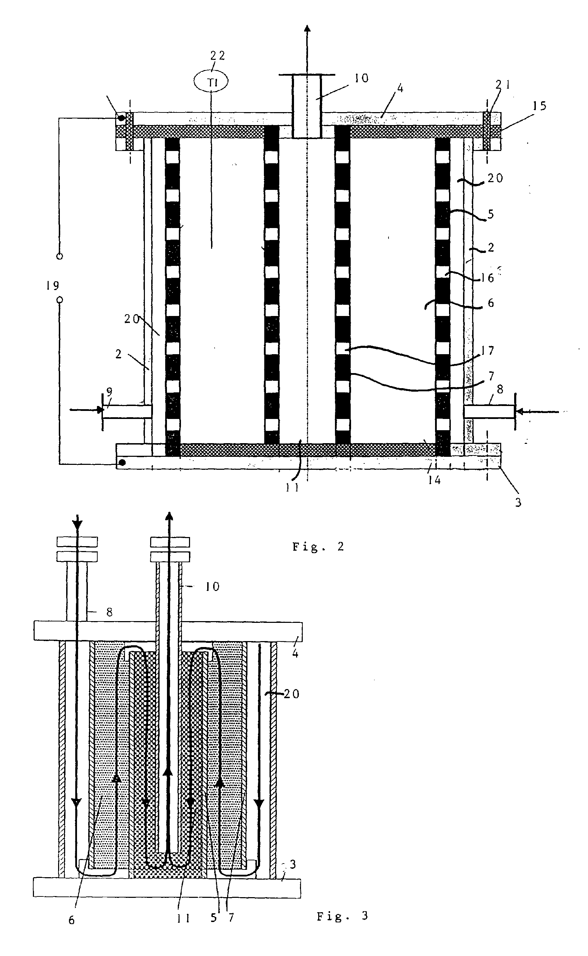

Das Rohr in der inneren Kammer kann boden- oder deckenseitig in diese Kammer eintreten und unterschiedlich tief innerhalb der Kammer enden. Das oder die Rohr(e) oder Rohrstutzen zum Zu- oder Abführen des Fluids in/aus der äußeren Kammer kann/können decken- oder bodenseitig oder gemäß Figur 2 wandseitig angeordnet sein.

Der Reaktor gemäß Figur 1 weist in der äußeren Elektrode am Boden und in der inneren Elektrode an der Decke einen Kranz von Öffnungen 16 bzw. 17 auf, durch welche das Fluid in die elektrisch beheizte Kammer ein- bzw. austreten kann.

Figur 1A zeigt einen solchen Kranz von Öffnungen. Diese Positionierung der Öffnungen 16 und 17 stellt sicher, dass das Fluid, von unten nach oben oder umgekehrt, durch das gesamte elektrisch beheizte Festbett strömen kann.

Figur 1B zeigt eine geeignete Form einer Kontaktierung einer Elektrode mit dem der Stromzufuhr dienenden Boden. Mittels eines Absatzes 12 wird die Kontaktfläche 22 vergrößert. Analog ausgebildet ist in Figur 1 die deckenseitige Kontaktierung der Elektrode 5 mittels eines Absatzes 13 mit der Decke 3.

In Figur 2 ist ein Reaktor dargestellt, der jenem der Figur 1 ähnlich ist, dessen rohrförmige Elektroden 5 und 7 jedoch über die Elektrodenfläche verteilt Poren oder Bohrungen 16 und 17 aufweisen. Das Fluid strömt hier quer zu den Elektroden. Mittels der Rohrstutzen 8 und 9, welche am Reaktormantel angeordnet sind, wird ein Fluid zugeführt; nach Verteilung desselben in die äußeren Kammer 20 strömt es durch die äußere Elektrode 5 in die elektrisch beheizbare Kammer 6 und nach Passage derselben durch die Öffnungen 17 der inneren Elektrode 7 in die innere Kammer 11 und entweicht durch den Rohrstutzen 10.

Wie schon ausgeführt, kann der Reaktor außer mindestens einem elektrisch beheizbaren Festbett auch in einer oder mehreren weiteren Kammern ein fluidpermeables Festbett, durch welches das Fluid vor oder nach dem Aufheizen strömt, aufweisen. Ein solches weiteres Festbett kann dem Vorheizen des Fluids oder einer an Festbettpartikeln heterogen katalysierten Reaktion von Fluidbestandteilen dienen. Gemäß Figur 3 durchströmt ein Fluid zuerst die äußere Kammer 20, dann parallel zu den Elektroden durch das Festbett der elektrisch beheizten Kammer 6, sodann durch die ggf. mit einem katalytisch wirksamen, teilchenförmigen Material gefüllte innere Kammer 11 und entweicht durch das zentral angeordnete und bis in die Nähe des Bodens reichende Rohr 10 - die Pfeilrichtung zeigt in Figur 3 die Strömungsrichtung des Fluids an. Durch diese Anordnung können auch mehrstufige Verfahren in einem Reaktor durchgeführt werden.

Weitere Ausführungsformen der Strömungsrichtung eines Fluids durch einen Reaktor folgen aus den schematischen Figuren 4A bis 4C - das Rektorgehäuse ist hier nicht abgebildet. Die Kugeln in den Kammern der Figuren 4A bis 4C symbolisieren elektrisch leitfähige, für eine Widerstandsbeheizung geeignete und gegebenenfalls zusätzlich katalytisch wirksame Partikel des Festbetts.

Der Reaktor gemäß Figur 4A enthält außer einer äußeren und inneren rohrförmigen Elektrode zusätzlich innerhalb der inneren rohrförmigen Elektrode eine stabförmige Zusatzelektrode.

Der erfindungsgemäße Reaktor kann mittels Gleichstrom und Wechselstrom oder Drehstrom betrieben werden. Aus sicherheitstechnischen Gründen ist insbesondere der Einsatz von Schutzkleinspannung vorteilhaft. Der Spannungsbedarf wird durch den spezifischen Widerstand des eingesetzten Materials und die Geometrie des Reaktors bestimmt und kann, wie oben beschrieben, in weiten Grenzen eingestellt werden. Die leichte Einstellbarkeit des Widerstandes der Schüttung zwischen den Elektroden eines Elektrodenpaares gestattet daher eine leichte Anpassung des Reaktors für unterschiedliche Anwendungen. Der elektrische Energieeintrag bedeutet auch Vorteile für die Dynamik eines instationär betriebenen Reaktors, in dem die elektrische Beheizung der Schüttung zu einer hohen Aufheizrate führt. Wie sich durch eine einfache Berechnung ergibt, ist die Leistungsdichte des Wärmeeintrages, also das Verhältnis aus Heizfläche zum Reaktorvolumen, um ein Vielfaches höher als bei einem herkömmlichen Rohrreaktor mit externer Befeuerung mittels Rauchgasen. Der Energieeintrag im Inneren der Schüttung führt gegenüber der externen Befeuerung auch zu homogeneren Temperaturprofilen. Darüber hinaus kommt es bei Verwendung von Materialien mit einer geeigneten Temperaturabhängigkeit des Widerstands zu einem selbstregelnden Ausgleich der Temperaturverteilung und zur Vermeidung von sogenannten hot spots.

Der erfindungsgemäße Reaktor ist durch einen einfachen und gleichzeitig vielseitig variierbaren Aufbau gekennzeichnet und erlaubt ein einfaches scale-up ohne Vervielfältigung der Einheiten (numbering-up). Der Energieeintrag mittels Strom ist nach physikalischen Gesetzen berechenbar, damit kann der Reaktor in beliebiger Größe realisiert werden. Der erfindungsgemäße elektrisch beheizte Reaktor zeichnet sich damit durch einen technisch einfachen Aufbau aus, der in seiner Anwendung zu wirtschaftlichen Prozessen führt.

Der erfindungsgemäße Festbettreaktor eignet sich zur Durchführung von Reaktionen in der Gasphase oder Flüssigphase, wobei Reaktionen in der Gasphase bevorzugt werden. Bei den Gasreaktionen kann es sich beispielsweise um die Bildung von Blausäure aus Methan und Ammoniak handeln (BMA-Verfahren). Derzeit wird das BMA-Verfahren in einem Rohrbündelreaktor, dessen Rohre eine katalytisch wirksame Beschichtung aufweisen, bei etwa 1200 °C durchgeführt. Bei derart hohen Temperaturen betriebene Rohrbündelreaktoren erfordern eine technisch aufwendige Konstruktion und zudem kommt es immer wieder zum Bruch von Reaktorröhren. Aufwendig sind auch die Mantelraumbeheizung und die Energierückgewinnung, wobei die Temperaturverteilung in den einzelnen Rohren einen großen Einfluss auf den Umsatz sowie die Standzeit der Rohre hat.

Im erfindungsgemäßen elektrisch beheizten Reaktor lässt sich das BMA-Verfahren durchführen, wobei die vorbeheizten Edukte, also Methan und Ammoniak, durch die zwischen den Elektroden befindliche Keramikschüttung geleitet werden. Da die Wärmezufuhr über die Ohm'sche Erwärmung des Granulats der Schüttung erfolgt, ergibt sich eine gleichförmige Temperaturverteilung und eine geringe Belastung der gesamten Konstruktion. Im Falle des BMA-Verfahrens weisen die Granulatkörner der Schüttung vorzugsweise eine an sich bekannte katalytisch wirksame Beschichtung auf. Bei Temperaturen oberhalb von 1600 °C ist jedoch besonders vorteilhaft auch der unkatalysierte Betrieb möglich.

Bei einer weiteren in einem erfindungsgemäßen elektrisch beheizten Reaktor durchführbaren Gasreaktion handelt es sich um die Reformierung von Brennstoffen, wie Methanol, zur Herstellung von Wasserstoff zwecks Verstromung in Brennstoffzellen.

Der erfindungsgemäße elektrisch beheizbare Reaktor ist auch hochtemperaturfähig, so dass sich viele Reaktionen, welche derzeit in Gegenwart eines heterogenen Katalysators durchgeführt werden, in Abwesenheit eines Katalysators durchgeführt werden können. Damit entfallen Kosten für die Herstellung und Regenerierung des Katalysators, und zusätzlich kann sich die Aufarbeitung des Produktes wegen der Abwesenheit von Katalysatorresten einfacher gestalten.

### Bezugszeichenliste

- 1: elektrisch beheizbarer Festbettreaktor
- 2: Reaktormantel (Wand)
- 3: Reaktorboden / Stromzufuhr für innere Elektrode
- 4: Reaktordecke / Stromzufuhr für äußere Elektrode
- 5: rohrförmige, innere Elektrode
- 6: Kammer mit elektrisch beheizbarem Festbett
- 7: rohrförmige, äußere Elektrode
- 8, 9: Rohrstutzen für Fluid Zu- oder Abfuhr in Fluidverteilungs-/Sammelkammer
- 10: Rohr für Fluid Zu- oder Abfuhr
- 11: innere Reaktorkammer
- 12: Kontaktierelement am Reaktorboden
- 13: Kontaktierelement an der Reaktordecke
- 14: bodenseitige Wärme- und Stromisolierung
- 15: deckenseitige Wärme- und Stromisolierung
- 16, 17: Öffnungen für Fluid-Durchgang durch die äußere bzw. innere Elektrode
- 18: Stromanschluss
- 19: Spannungsquelle
- 20: äußere Reaktionskammer
- 21: Verschraubung (wärmeisoliert)
- 22: Kontaktfläche für Stromleitung
- 23: Temperaturmessung
- 24: Zusatzelektrode oder Trennwand

## Patentansprüche

1. Elektrisch beheizter Festbettreaktor, umfassend ein Reaktorgehäuse, mindestens ein darin angeordnetes Elektrodenpaar, ein zwischen den beiden Elektroden eines jeden Elektrodenpaares angeordnetes fluiddurchströmbares Festbett aus einem teilchenförmigen elektrisch leitfähigen Material, je eine Vorrichtung zum Zuführen eines Fluids in und Abführen desselben aus jedem Festbett und Kontaktierelemente von den Elektroden jeden Elektrodenpaares zu einer Spannungsquelle,
**dadurch gekennzeichnet,**
**dass** (i) die beiden Elektroden eines Elektrodenpaares plattenförmig ausgebildet und parallel zueinander und gegenüberliegend angeordnet sind und mit dem dazwischen befindlichen Festbett eine elektrisch beheizbare Reaktorkammer bilden oder dass
(ii) die beiden Elektroden eines Elektrodenpaares rohrförmig ausgebildet sind, die einen unterschiedlichen Durchmesser aufweisende rohrförmigen Elektroden eines Elektrodenpaares konzentrisch ineinander stehen und mit dem zwischen den Elektroden befindlichem Festbett eine hohlzylinderförmige elektrisch beheizbare Reaktorkammer bilden, und dass in einem Reaktor gemäß (i) oder (ii) mit mehr als einem Elektrodenpaar und damit mehr als einer Reaktorkammer zwei Kammern eine als gemeinsame Elektrode ausgebildete Zwischenwand aufweisen.

2. Festbettreaktor nach Anspruch 1,
**dadurch gekennzeichnet,**
**dass** er ein Elektrodenpaar mit rohrförmigen Elektroden aufweist, das Reaktorgehäuse einen Boden, eine Decke und eine Gehäusewand umfasst, wobei die eine Elektrode jeden Elektrodenpaares über den Boden und die andere Elektrode über die Decke als Kontaktierelement mit je einem Pol einer Spannungsquelle verbunden ist, in jeder rohrförmigen Wand der Reaktorkammer mindestens eine Öffnung zum Zuführen oder Abführen eines Fluids aufweist, zwischen der Gehäusewand und der außenliegenden Elektrode eine mit einem Stutzen zum Zuoder Abführen eines Fluids versehene hohlzylinderförmige Kammer ausgebildet ist und die von der innenliegenden Elektrode umschlossene zylinderförmige Kammer einen Stutzen zum Zu- oder Abführen eines Fluids aufweist.

3. Festbettreaktor nach Anspruch 1 oder 2,
**dadurch gekennzeichnet,**
**dass** er ein Elektrodenpaar mit rohrförmigen Elektroden umfasst, wovon die eine Elektrode im unteren Drittel und die andere Elektrode im oberen Drittel entlang des jeweiligen Umfangs mehrere Öffnungen aufweist.

4. Festbettreaktor nach Anspruch 1 oder 2,
**dadurch gekennzeichnet,**
**dass** die ein Elektrodenpaar bildenden Elektroden über im wesentlichen die gesamte Fläche der gegenüberliegenden Platten oder Rohre verteilt durchgehende Poren oder Öffnungen aufweisen, wobei die Poren oder Öffnungen als Vorrichtung zum Zu- und Abführen eines Fluids dienen.

5. Festbettreaktor nach einem Ansprüche 1 bis 4,
**dadurch gekennzeichnet,**
**dass** er ein Elektrodenpaar aus rohrförmigen Elektroden umfasst und die von der inneren Elektrode umschlossene zylinderförmige Kammer und/oder eine zwischen der äußeren Elektrode und der Wand des Reaktorgehäuses angeordnete hohlzylinderförmige Kammer mit einem Festbett aus einem teilchenförmigen Material gefüllt ist/sind.

6. Festbettreaktor nach einem der Ansprüche 1 oder 4,
**dadurch gekennzeichnet,**
**dass** das Reaktorgehäuse zwei Elektrodenpaare aus plattenförmigen Elektroden umfasst, wobei jeweils eine Elektrode mit gleicher Polung gegenüberliegende Wände einer Kammer mit einer Vorrichtung zum Zu- oder Abführen eines Fluids bilden.

7. Festbettreaktor nach einem der Ansprüche 1 bis 6,
**dadurch gekennzeichnet,**
**dass** er im Gehäuse mindestens eine äußere Kammer, ein elektrisch beheiztes Festbett enthaltende Kammer und eine dritte Kammer mit einem in diese reichenden Rohr umfasst, wobei jede Kammer eine Vorrichtung zum Zuoder Abführen eines Fluids aufweist, deren Anordnung eine mäanderförmige Passage des Fluids durch die Kammern ermöglicht.

8. Festbettreaktor nach einem der Ansprüche 1 bis 7,
**dadurch gekennzeichnet,**
**dass** es sich bei der Vorrichtung zum Zu- oder Abführen eines Fluids um eine Vorrichtung zum Zuführen/Abführen eines Gases handelt.

9. Verwendung eines Festbettreaktors zur Durchführung von Gasreaktionen, insbesondere endotherme Gasreaktionen.

10. Verwendung nach Anspruch 9,
**dadurch gekennzeichnet,**
**dass** es sich bei der Gasreaktion um die Bildung von Blausäure aus Methan und Ammoniak handelt (BMA-Verfahren).

11. Verwendung nach Anspruch 9,
**dadurch gekennzeichnet,**
**dass** es sich bei der Gasreaktion um die Erzeugung von Wasserstoff aus Brennstoffen, wie insbesondere Methanol, nach dem Reformierungsverfahren handelt.
